# EUROPÄISCHE PATENTSCHRIFT

(11) **EP 2 160 443 B1**
(45) Veröffentlichungstag und Bekanntmachung des Hinweises auf die Patenterteilung: **13.10.2010**
(21) Anmeldenummer: 08761240.4
(22) Anmeldetag: 19.06.2008
(51) Int. Cl.: C08L 23/22

(54) **SEMI-INTERPENETRIERENDES NETZWERK MIT EINER PHASE EINES LINEAREN UNVERNETZTEN ISOBUTENPOLYMERS**
SEMI-INTERPENETRATING NETWORK HAVING A PHASE OF A LINEAR UNCURED ISOBUTANE POLYMER
RÉSEAU SEMI-INTERPÉNÉTRANT AVEC UNE PHASE D'UN POLYMÈRE D'ISOBUTÈNE LINÉAIRE NON CONNECTÉ

(30) Priorität: 19.06.2007 EP 07110606; 07.11.2007 EP 07120214
(43) Veröffentlichungstag der Anmeldung: 10.03.2010
(73) Patentinhaber: BASF SE, 67056 Ludwigshafen (DE)
(72) Erfinder: HANEFELD, Phillip, 69115 Heidelberg (DE); HILDEBRANDT, Nicole, 68239 Mannheim (DE); MÜHLBACH, Klaus, 67269 Grünstadt (DE); MACH, Helmut, 69115 Heidelberg (DE); WALTER, Hans-Michael, 67251 Freinsheim (DE); TEYSSIE, Dominique, F-78230 Le Pecq (FR); FICHET, Odile, F-78300 Poissy (FR); VANCAEYZEELE, Cedric, F-78540 Vernauillet (FR); DAVION, Benjamin, F-95800 Cergy (FR)
(86) Internationale Anmeldenummer: PCT/EP2008/057815
(87) Internationale Veröffentlichungsnummer: WO 2008/155395

(56) Entgegenhaltungen:
- EP-A- 0 517 067
- WO-A-2005/019285
- WO-A-2007/025699
- DE-A1- 3 115 368
- US-A- 4 477 325
- VANCAEYZEELE ET AL: "Polyisobutene-poly(methylmethacrylate) interpenetrating polymer networks: synthesis and characterization" POLYMER, ELSEVIER SCIENCE PUBLISHERS B.V, GB, Bd. 46, Nr. 18, 23. August 2005 (2005-08-23), Seiten 6888-6896, XP005009153 ISSN: 0032-3861
- VANCAEYZEELE ET AL: "Polyisobutene/polystyrene interpenetrating polymer networks: Effects of network formation order and composition on the IPN architecture" POLYMER, ELSEVIER SCIENCE PUBLISHERS B.V, GB, Bd. 47, Nr. 6, 8. März 2006 (2006-03-08), Seiten 2046-2060, XP005326039 ISSN: 0032-3861
- VANCAEYZEELE ET AL: "Polyisobutene/polycyclohexyl methacrylate interpenetrating polymer networks" POLYMER, ELSEVIER SCIENCE PUBLISHERS B.V, GB, Bd. 47, Nr. 17, 9. August 2006 (2006-08-09), Seiten 6048-6056, XP005575234 ISSN: 0032-3861

## Beschreibung

Die Erfindung betrifft ein semi-interpenetrierendes Netzwerk mit einer ersten Phase eines linearen unvernetzten Isobutenpolymers und einer zweiten Phase eines vernetzten Polymers.

Lineare Polyisobutene zeichnen sich durch besondere Eigenschaften aus, wie hohe Gas- und Feuchtigkeitssperrwirkung und hohe klebrigmachende Wirkung. Man macht sich die Gas- und Feuchtigkeitssperrwirkung der Polyisobutenen z. B. in Dichtmassen zu Nutze. Nachteiligerweise zeigen lineare Polyisobutene eine starke Kriechneigung bzw. kalten Fluss, die für viele Anwendungen unerwünscht sind. Zwar kann die Kriechneigung durch Zumischen von Füllstoffen, wie Russ oder Talkum verringert werden, doch sind diese Gemische nicht vollständig zufriedenstellend.

Die klebrigmachende Wirkung der Polyisobutenen wird in Klebstoffen ausgenutzt. Allerdings sind die Klebstoffe aufgrund der geringen Kohäsion der Polyisobutene nicht vollständig zufriedenstellend.

Es ist z. B. aus Paul D. R. und Barlow J. W., J. Macromol. Sci., Rev. Macromol. Chem., 18, 109 (1980) und Krause S. in "Polymer Blends" 1, 66, Paul D. R. und Newman S. Hrsg., Academic Press New York (1978) bekannt, dass Polyalkylenpolymere und ataktisches Polystyrol vollkommen inkompatibel sind. Physikalische Gemische dieser Polymere sind heterogen und weisen auf Grund der mangelnden Mischbarkeit die beiden Glasübergangstemperaturen der reinen Komponenten auf.

Man hat versucht, die Polymere auf molekularer Ebene zu mischen und so genannte interpenetrierende Netzwerke zu erhalten, indem man ein vernetztes Polyalkylenpolymer mit Styrol quillt und das Styrol anschließend in situ polymerisiert. Allerdings ist der erreichbare Quellgrad beschränkt und man kann auf diese Weise keine wesentlich höheren Polystyrol-Anteile als 10 % in das Netzwerk einbringen. Außerdem ist die damit verbundene Eigenschaftsmodifizierung nicht stabil und verschwindet bei thermischer Belastung auf Grund von Entmischungserscheinungen.

Die DE 31 15 368 beschreibt die Herstellung eines schlagfesten Polystyrols. Ein Isobutenpolymerisat wird in Styrol gelöst und nach Zugabe eines Peroxids polymerisiert.

Die WO 2005/019285 beschreibt eine Formmasse, die ein interpenetrierendes Gemisch eines vernetzten Isobutenpolymers und eines versteifenden Polymers mit (Meth)acryl- und/oder Vinylaromateneinheiten umfasst. Das vernetzte Isobutenpolymer ist das Reaktionsprodukt eines Isobutenpolymers mit durchschnittlich wenigstens 1,4 funktionellen Gruppen im Molekül und eines Vernetzungsmittels mit durchschnittlich wenigstens zwei funktionellen Gruppen im Molekül, die komplementär funktionell zu den funktionellen Gruppen des Isobutenpolymers sind.

Die US-A 5,270,091 beschreibt einen Dichtstreifen, der als Abstandhalter zwischen den Glasscheiben eines Isolierglasfensters dient. Der Streifen umfasst ein formbares Dichtmaterial, das erhalten ist, indem man unfunktionalisiertes Polyisobuten mit Butylkautschuk mischt und den Butylkautschuk anschließend vernetzt. Allerdings ist die nachträgliche Vernetzung des Butylkautschuks nur schwer zu steuern und eine homogene Vernetzung und/oder ausreichend hohe Vernetzungsdichten sind nicht oder nur unter Schwierigkeiten erreichbar. Bei der Nachvernetzung kann es auch zu unerwünschten Nebenreaktionen und Depolymerisation des Polyisobutens kommen. Insgesamt erhält man ein schlecht definiertes Polymernetzwerk.

Die US-A 4,477,325 offenbart einen Wundverband, der ein Gemisch eines Ethylen-Vinylacetat-Copolymers und Polyisobuten enthält. Nach der Formung wird das Gemisch mit γ-Strahlen behandelt, um das Ethylen-Vinylacetat-Copolymer zu vernetzen. Die Vernetzung durch γ-Strahlung ist nur schwer zu steuern und eine homogene Vernetzung und/oder ausreichend hohe Vernetzungsdichten sind nicht oder nur unter Schwierigkeiten erreichbar. Unerwünschte Nebenreaktionen und Depolymerisation des Polyisobutens sind unvermeidbar.

Es ist wünschenswert, über (1) formstabile Dichtmassen bzw. Formkörper mit hoher Gas- und Feuchtigkeitssperrwirkung und (2) Klebemassen, die hohe Adhäsion mit hoher Kohäsion verbinden, zu verfügen.

Erfindungsgemäß wird die Aufgabe gelöst durch ein semi-interpenetrierendes Netzwerk mit einer ersten Phase eines linearen unvernetzten Isobutenpolymers und einer zweiten Phase eines vernetzten Polymers, wobei das vernetzte Polymer durch vernetzende Aufbaureaktion in Gegenwart des Isobutenpolymers erhalten ist.

Unter einem semi-interpenetrierenden Netzwerk wird eine Kombination eines vernetzten Polymers und eines linearen unvernetzten Polymers verstanden, wobei ein Polymer in Gegenwart des anderen synthetisiert ist. Zwischen den beiden Polymerkonstituenten bestehen im Wesentlichen keine kovalenten Bindungen. Das unvernetzte Polymer durchdringt das Netzwerk des vernetzten Polymers und bewirkt, dass die beiden Komponenten infolge von Verhakungen und Verschlaufungen physikalisch kaum trennbar sind. Dieses semi-interpenetrierende Netzwerk ermöglicht die Eigenschaftskombination zweier Polymere, selbst wenn sie thermodynamisch unverträglich sind. Gegenüber gewöhnlichen Polymerblends zeichnen sich die semi-interpenetrierenden Netzwerke durch bessere Beständigkeit gegenüber Entmischung und bessere mechanische Eigenschaften aus. Die Abbaubeständigkeit der semi-interpenetrierenden Netzwerke ist gewöhnlich besser als die von Copolymeren, in denen die unverträglichen Polymere als Blöcke kovalent miteinander verbunden sind.

In der vorliegenden Erfindung wird ein Isobutenpolymer als das lineare unvernetzte Polymer verwendet. Das semi-interpenetrierende Netzwerk gestattet die Herstellung von (1) Materialien, die sich durch hohe Gas- und Feuchtigkeitssperrwirkung ohne Klebrigkeit und ohne kalten Fluss auszeichnen, oder (2) Materialien, die sich durch Klebrigkeit und sehr geringen kalten Fluss auszeichnen, oder (3) Materialien, die sich durch hohe Gas- und Feuchtigkeitssperrwirkung und Klebrigkeit ohne kalten Fluss auszeichnen.

Das Gewichtsverhältnis der ersten zur zweiten Phase in der erfindungsgemäßen Formmasse beträgt im Allgemeinen 5:95 bis 95:5, vorzugsweise 5:95 bis 80:20, insbesondere 30:70 bis 70:30.

Massen mit hohen Gehalte des vernetzten Polymers (z. B. mit einem Gewichtsverhältnis der ersten Phase zur zweiten Phase von 60:40. bis 10:90, vorzugsweise 50:50 bis 30:70) zeigen im Wesentlichen keine Klebrigkeit und keinen kalten Fluss. Die Gas- und Feuchtigkeitssperrwirkung des Polyisobutens ist erhalten. Die Massen eignen sich als formstabile Dichtmassen oder Formkörper mit Barrierewirkung für Luft und/oder Wasserdampf.

Bei erfindungsgemäße Massen mit hohem Anteil des Isobutenpolymers (z. B. mit einem Gewichtsverhältnis der ersten zur zweiten Phase von 60:40 bis 90:10, vorzugsweise 60:40 bis 80:20) bleiben die klebrigmachenden Eigenschaften des Polyisobutens weitgehend erhalten. Die Massen sind jedoch weitgehend frei von kaltem Fluss und zeigen eine gegenüber Polyisobuten verbesserte Kohäsion.

Durch Variation des Gewichtsverhältnisses der ersten zur zweiten Phase und/oder des Vernetzungsgrades der zweiten Phase können die Eigenschaften des semi-interpenetrierenden Netzwerkes den jeweiligen Bedürfnissen angepasst werden. So können beispielsweise wasserdichte Klebstoffe oder klebrige Dichtmassen erhalten werden.

Durch die Anwesenheit der vernetzten zweiten Phase können Formkörper auch mit hohem Anteil an Isobutenpolymer hergestellt werden.

### Isobutenpolymer

Das Isobutenpolymer umfasst wenigstens 80 Gew.-%, insbesondere wenigstens 90 Gew.-% und besonders bevorzugt wenigstens 95 Gew.-% und am meisten bevorzugt wenigstens 99 Gew.-% Isobuteneinheiten. Neben Isobuteneinheiten kann das Isobutenpolymer auch Einheiten von olefinisch ungesättigten Monomeren, welche mit Isobuten copolymerisierbar sind, enthalten. Die Comonomere können statistisch im Polymer verteilt oder als Blöcke angeordnet sein Als copolymerisierbare Monomere kommen vor allem Vinylaromaten wie Styrol, C₁-C₄-Alkylstyrole wie α-Methylstyrol, 3- und 4-Methylstyrol, oder 4-tert-Butylstyrol, sowie Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1, oder Diene wie Isopren oder Butadien, in Betracht.

Vorzugsweise weist das Isobutenpolymer ein zahlenmittleres Molekulargewicht von 500 bis 500 000, insbesondere 1000 bis 200 000, besonders bevorzugt 20 000 bis 100 000 auf.

Erfindungsgemäß geeignete Polyisobutene und ihre Herstellung sind z. B. in den US-A-5137980, EP-A-145235 und US-A-5068490 beschrieben. Sie werden in der Regel durch kationische Polymerisation von Isobuten erhalten. Die Polymerisation verläuft z. B. unter Bortrifluorid-Katalyse.

Geeignete Polyisobutene sind unter der Bezeichnung Oppanol® B 10, Oppanol® B 12 oder Oppanol® B 15 von der BASF Aktiengesellschaft, Ludwigshafen, Deutschland, erhältlich.

In der Regel weist das Polyisobuten aufgrund seiner Herstellung durch kationische Polymerisation an einem Molekülende eine ethylenische Unsättigung auf. Diese ethylenische Unsättigung ist durch radikalische Polymerisation in der Regel nicht homo- oder copolymerisierbar. Bei der radikalischen Polymerisation ethylenisch ungesättigter Monomere in Gegenwart des Isobutenpolymers nimmt das Isobutenpolymer an der Reaktion daher im Wesentlichen nicht teil. Es bilden sich keine kovalenten Bindungen zwischen dem entstehenden vernetzten Polymer und dem Isobutenpolymer. Das Isobutenpolymer weist (außer einer fakultativen terminalen ethylenischen Unsättigung) vorzugsweise keine funktionelle Gruppen auf.

### Vernetztes Polymer

Die zweite Phase des erfindungsgemäßen semi-interpenetrierenden Netzwerks wird von einem vernetzten Polymer gebildet. Das vernetzte Polymer wird durch vernetzende Aufbaureaktion in Gegenwart des Isobutenpolymers erhalten. Unter einer vernetzenden Aufbaureaktion wird eine Umsetzung verstanden, bei der parallel zum Aufbau eines Makromoleküls aus monomeren und/oder oligomeren Bestandteilen Verzweigungen und/oder Vernetzungen in die wachsenden Polymerketten eingebaut werden.

Zur Herstellung des erfindungsgemäßen semi-interpenetrierenden Netzwerks geht man z. B. so vor, dass man Monomere, die das vernetzte Polymer aufbauen, zusammen mit wenigstens einem Vernetzungsmittel in Gegenwart des Isobutenpolymers einer Aufbaureaktion unterzieht. Alternativ kann man polyfunktionelle Harz-Vorläufer, wie Phenolharz-Vorkondensate, in Gegenwart des Isobutenpolymers einer Aufbaureaktion unterziehen.

Die Art der Aufbaureaktion ist nicht kritisch. Es kann sich z. B. um eine Polymerisation ethylenisch ungesättigter Monomere, die radikalisch, anionisch oder kationisch katalysiert sein kann, eine Polyaddition oder eine Polykondensation handeln.

Der Aufbau und die chemische Beschaffenheit des vernetzten Polymers sind nicht kritisch, solange es aus Vorläufern hergestellt werden kann, die mit dem Isobutenpolymer zumindest teilweise mischbar sind und die Aufbaureaktion unter Bedingungen, insbesondere hinsichtlich der angewendeten Temperaturen, Art der verwendeten Katalysatoren und dergleichen, durchgeführt werden kann, die zu keiner wesentlichen Beeinträchtigung und/oder Zersetzung des Isobutenpolymer führen.

In einer Ausführungsform wird das vernetzte Polymer durch radikalische Polymerisation ethylenisch ungesättigter Monomere, die wenigstens ein mehrfach ethylenisch ungesättigtes Monomer umfassen, erhalten.

In einer weiteren Ausführungsform ist das vernetzte Polymer ein Polysiloxan.

In einer weiteren Ausführungsform ist das vernetzte Polymer ein Polyurethan und/oder Polyharnstoff. Diese Aufzählung ist nicht abschließend.

In einer weiteren Ausführungsform ist das vernetzte Polymer ein Resolharz.

Durch radikalische Polymerisation erhaltenes vernetztes Polymer

Geeignete ethylenisch ungesättigte Monomer sind unter anderem:
vinylaromatischen Monomere, wie Styrol, kernalkylierte Styrole mit bevorzugt C₁-C₄-Alkylresten wie α-Methylstyrol, p-Methylstyrol;
(Meth)acrylmonomere, wie Alkylacrylate und -methacrylate mit 1 bis 18 C-Atomen im Alkylrest, wie insbesondere Methylmethacrylat. Ethylmethacrylat, Propyl(meth)acrylat, Isopropyl(meth)acrylat, n-Butyl(meth)acrylat, Isobutyl(meth)acrylat, tert-Butyl-(meth)acrylat, Hexyl(meth)acrylat, Cyclohexyl(meth)acrylat, Decyl(meth)acrylat, Isodecyl(meth)acrylat, Lauryl(meth)acrylat, Isobornyl(meth)acrylat, Adamantyl(meth)acrylat;
Benzyl(meth)acrylat, Phenyl(meth)acrylat, tert-Butylphenyl(meth)acrylat, 4-Biphenyl-(meth)acrylat, 2-Naphthyl(meth)acrylat;
Acrylnitril, Methacrylnitril,
oder Gemische der genannten Monomere. Diese Aufzählung ist nicht abschließend.
Styrol, Cyclohexylmethacrylat und C₃-C₁₈-Alkylmethacrylate sind besonders geeignete Monomere.

Man kann einen geringen Anteil, z. B. bis zu 2 Gew.-%, bezogen auf die Gesamtmenge der Monomere, wasserlösliche oder hydrophiler Monomere mitverwenden. Wasserlösliche Monomere sind z. B. (Meth)acrylsäure, (Meth)acrylamid. Hydrophile Monomere sind vor allem solche, die über eine Hydroxy- und/oder Aminogruppe verfügen, wie 2-Hydroxyethyl(meth)acrylat, 2-Hydroxypropyl(meth)acrylat, Butandiolmono(meth)-acrylat, Dimethylaminoethyl(meth)acrylate).

Weitere geeignete Monomere sind z.B. dem Handbook of Polymers, CRC Series, zu entnehmen.

Verwendet werden vorzugsweise Monomere und Monomerengemische, die ein Polymer bzw. Copolymer mit einer Glasübergangstemperatur von mehr als -70 °C, vorzugsweise mehr als +20 °C und bevorzugt mehr als +50 °C ergeben.

Vorzugsweise werden Monomere und Monomerengemische verwendet, die ein Polymer bzw. Copolymer mit einem Löslichkeitsparameter ergeben, der sich von dem des Isobutenpolymers um weniger als 1 MPa^{1/2}, vorzugsweise weniger als 0,7 MPa^{1/2}, insbesondere weniger als 0,5 MPa^{1/2}, unterscheidet. Bei einer geringen Differenz zwischen den Löslichkeitsparametern des Isobutenpolymers und des vernetzten Polymers ist die gegenseitige Verträglichkeit der Polymere hoch und der extrahierbare Anteil des Netzwerks gering. Unter diesem Gesichtspunkt sind Styrol (Löslichkeitsparameterdifferenz Polyisobuten/Polystyrol = 0,31 MPa^{1/2}) und Cyclohexylmethacrylat (Löslichkeitsparameterdifferenz Polycyclohexylmethacrylat/Polystyrol = 0,20 MPa^{1/2}) besonders bevorzugt.

Die Berechnungsmethode (Inkrementmethode von Hoftyzer-Van Krevelen) und experimentell ermittelte Werte für die Löslichkeitsparameter sind in US 6362274 B1, J. Applied Polym. Sci. 2000, 78, 639, und in der folgenden Monographie erläutert: D. W. van Krevelen, "Properties of polymers. Their correlation with chemical structure; their numerical estimation and prediction from additive group contributions", 3. Auflage, Elsevier, 1990, S. 189 - 225.

Durch Auswahl von Monomeren mit einem ähnlichen Brechungsindex zu dem des Isobutenpolymers können transparente semi-interpenetrierende Netzwerke hergestellt werden. So werden transparente semi-interpenetrierende Netzwerke erhalten, wenn als Monomer Cyclohexylmethacrylat verwendet wird, vorzugsweise zu wenigstens 70 Gew.-%, bezogen auf die eingesetzten Monomere.

Die vorstehenden einfach ethylenisch ungesättigten Monomeren werden zusammen mit mehrfach ethylenisch ungesättigten Monomeren verwendet. Alternativ kann man im Wesentlichen ausschließlich mehrfach ethylenisch ungesättigten Monomere verwenden.

Zu den mehrfach ethylenisch ungesättigten Monomere zählen Verbindungen, die wenigstens zwei nicht-konjugierte, ethylenisch ungesättigte Doppelbindungen aufweisen, z. B. die Diester zweiwertiger Alkohole mit α,β-monoethylenisch ungesättigten C₃-C₁₀-Monocarbonsäuren. Beispiele für derartige Verbindungen sind Alkylenglykoldiacrylate und -dimethacrylate, wie Ethylenglykoldiacrylat, 1,3-Butylenglykoldiacrylat, 1,4-Butylenglykoldiacrylat, Propylenglykoldiacrylat, Polyethylenglykoldi(meth)acrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat.

Weiterhin kann es sich bei den vernetzenden Monomeren z. B. um Epoxid- oder Urethan(meth)acrylate handeln.

Epoxid(meth)acrylate sind z. B. solche wie sie durch Umsetzung von Poly- bzw. Diglycidylethern, wie Bisphenol-A-diglycidylether, mit (Meth)acrylsäure erhältlich sind.

Die Umsetzung ist dem Fachmann bekannt und z. B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984).

Zu den Urethan(meth)acrylaten zählen auch die Umsetzungsprodukte von Hydroxyalkyl(meth)acrylaten mit Isocyanuraten. Als Isocyanurate bevorzugt sind die Isocyanurate der üblichen Diisocyanate. Insbesondere zu nennen sind Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4' -Diisocyanato-diphenylmethan, 2,4' -Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Die vernetzenden Monomere werden üblicherweise in einer Menge von 0,1 bis 100 Mol-%, z. B. 0,1 bis 30 Mol.-%, vorzugsweise 1 bis 20 Mol.-%, insbesondere 3 bis 10 Mol.-%, bezogen auf die Gesamtmenge der konstituierenden Monomere, verwendet.

Gegebenenfalls kann man auch nachvernetzende Monomere mitverwenden. Die vernetzungsaktiven Stellen der nachvernetzenden Monomere nehmen an der Aufbaureaktion nicht teil, können aber in einem nachgelagerten Schritt selektiv nachvernetzt werden. Geeignete nachvernetzende Monomere sind z. B. Glycidylmethacrylat, Acrylamidoglykolsäure, Methylacrylamidoglykolsäuremethylester, N-Methylolacrylamid, N-Methylolmethacrylamid, N-Methylolallylcarbamat, Alkylether und Ester des N-Methyloacrylamids sowie des N-Methylolmethacrylamids und des N-Methylolallylcarbamats, sowie Acryloxypropyltri(alkoxy)- und Methacryloxypropyltri(alkoxy)-Silane, Vinyltrialkoxysilane und Vinylmethyldialkoxysilane.

Die Menge der vernetzenden Monomere wird so gewählt, dass sich ein gewünschter Vernetzungsgrad einstellt. Der Vernetzungsgrad ist definiert als Stoffmenge (in mol) Vernetzer dividiert durch die Stoffmenge (in mol) der insgesamt vorhandenen Monomere. Der Vernetzungsgrad beträgt vorzugsweise 1 bis 20%, insbesondere 3 bis 10%.

Die Polymerisation wird mittels eines radikalbildenden Initiators und/oder durch energiereiche Strahlung wie UV-Strahlung oder Elektronenstrahlung initiiert. Es können auch Redoxinitiatorpaare, die ein Oxidationsmittel und ein Reduktionsmittel umfassen, verwendet werden. Der Initiator wird üblicherweise in einer Menge von 0,1 bis 2 Gew.-%, bezogen auf die Gesamtmenge der Monomere des vernetzten Polymers, verwendet. Geeignete Initiatoren aus der Klasse der Peroxidverbindungen, Azoverbindungen oder Azoperoxidverbindungen sind dem Fachmann bekannt und im Handel erhältlich.

Als Beispiele geeigneter Initiatoren lassen sich Di-tert-butyloxypivalat, Didecanoylperoxid, Dilauroylperoxid, Diacetylperoxid, Di-tert-butylperoctoat, Dibenzoylperoxid, tert-Butylperacetat, tert-Butylperoxyisopropylcarbonat, tert-Butylperbenzoat, Di-tert-butylperoxid, 1,1-Bis-(tert-butylperoxy)-3,3,5-trimethylcyclohexan, 2,5-Dimethyl2,5-bis-(benzoylperoxy)-hexan, 1,4-Di-(tert-butylperoxycarbonyl)-cyclohexan, 1,1-Bis-(tert-butylperoxy)-cyclohexan, Di-tert-butyldiperoxyazelat, oder Di-tert-butylperoxycarbonat anführen. Davon sind Dilauroylperoxid, Dibenzoylperoxid, tert-Butylperbenzoat und tert-Butylperoxyisopropylcarbonat bevorzugt.

Ein geeigneter Azoinitiator ist z. B. Azoisobutyronitril (AIBN).

In bestimmten Ausführungsformen verwendet man einen Fotoinitiator.

Beim Fotoinitiator kann es sich z. B. um sogenannte a -Spalter handeln, das sind Fotoinitiatoren, bei denen eine chemische Bindung gespalten wird, so dass 2 Radikale entstehen, die die weiteren Vernetzungs- oder Polymerisationsreaktionen initiieren.

Genannt seien z. B. Acylphosphinoxide (Lucirin^{®} Marken der BASF), Hydroxyalkylphenone (z. B. lrgacure^{®} 184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z. B. handelt es sich hierbei um Fotoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Fotoinitiatoren allein oder auch im Gemisch verwendet werden.

Die thermische Polymerisation erfolgt üblicherweise bei erhöhter Temperatur, wobei ein Temperaturbereich von 40 bis 180 °C, vorzugsweise 60 bis 120 °C, geeignet ist. Mit Vorteil kann die Temperatur auch stufenweise erhöht werden. Wird die Polymerisation durch energiereiche Strahlung initiiert, sind auch niedrigere Temperaturen geeignet, z. B. Umgebungstemperatur.

Die Polymerisation kann auf verschieden Weise erfolgen. Sie erfolgt üblicherweise als Substanzpolymerisation, Lösungspolymerisation, Emulsionspolymerisation oder Miniemulsionpolymerisation.

Lösungsmittel können gegebenenfalls mitverwendet werden. Bei niedrigen bis mittleren Anteilen, z. B. bei Gewichtsverhältnis der ersten Phase zur zweiten Phase bis zu 70:30, kann die Synthese in Abwesenheit von Lösungsmittel erfolgen, wenn das Isobutenpolymer in den Vorläufern des vernetzten Polymers, z. B. den konstituierenden Monomeren, löslich ist. Die Monomere wirken als Reaktivlösungsmittel. Zur Verringerung der Viskosität der Reaktionsmischung kann es dennoch vorteilhaft sein, ein Lösungsmittel mitzuverwenden. Bei höheren Gewichtsverhältnissen der ersten Phase zur zweiten Phase als 70:30 oder wenn das isobutenpolymer in den Vorläufern des vernetzten Polymers nicht oder nicht ausreichend löslich ist, ist die Zugabe eines Lösungsmittels in der Regel unvermeidlich.

Hierzu sind gesättigte oder ungesättigte aliphatische Kohlenwasserstoffe wie Hexan, Pentan, Isopentan, Cyclohexan, Methylcyclohexan, Diisobuten, Triisobuten, Tetraisobuten, Pentaisobuten, Hexaisobuten oder Gemische davon, aromatische Kohlenwasserstoffe wie Benzol, Toluol, Xylol, halogenierte Kohlenwasserstoffe, wie Dichlormethan oder Trichlormethan, oder Gemische davon geeignet.

Man kann die Polymerisation auch in Gegenwart eines Weichmachers oder eines Weichmachergemisches durchführen, wie den Phthalaten und Adipaten aliphatischer oder aromatischer Alkohole, z. B. Di-(2-ethylhexyl)adipat, Di-(2-ethylhexyl)phthalat, Diisononyladipat oder Diisonylphthalat.

### Vernetztes Polysiloxan

Polysiloxane sind durch Hydrolyse und Kondensation von Silanen mit hydrolysierbaren Gruppen herstellbar ist. Hydrolysierbare Gruppen sind insbesondere Alkoxygruppen (Si-OR) oder Halogenatome (Si-Hal).

Als Vorläufer für ein vernetztes Polysiloxan verwendet man vorzugsweise bifunktionelle Silane, wie Dimethoxydimethylsilan, Diethoxydimethylsilan, Dimethoxydiphenylsilan, Diethoxydiphenylsilan, Dimethyldichlorsilan, Diphenyldichlorsilan und/oder α,ω-Dihdroxy-polydimethylsiloxane oder α,ω-Dihdroxy-polydimethyldiphenylsiloxane (vorzugsweise einer Molmasse von 300 bis 5000), zusammen mit Silanen mit drei und/oder Silanen mit vier hydrolysierbaren Gruppen, wie Trimethoxymethylsilan, Triethoxymethylsilan, Trimethoxyphenylsilan, Triethxoyphenylsilan; Tetramethoxysilan oder Tetraethoxysilan.

Die relativen Mengen der bi-, tri- und/oder tetrafunktionellen Silane werden so gewählt, dass sich ein gewünschter Vernetzungsgrad einstellt.

Die bei der Hydrolyse entstehenden Silanole kondensieren unter Bildung von Siloxanbindungen.

Als Katalysator kann man Zinn- oder Titanverbindungen verwenden, z. B. Zinn(II)-octanoat.

### Vernetzte Polyurethane und/oder Polyharnstoffe

Durch Umsetzung von Polyisocyanaten mit wenigstens einer isocyanat-reaktiven Verbindung, die unter Polyolen, Polyaminen oder Verbindungen mit Amin- und Hydroxyfunktionen ausgewählt ist, werden Polyurethane und/oder Polyharnstoffe erhalten. Damit man Netzwerke erhält muss zumindest das Polyisocyanat und/oder die isocyanat-reaktive Verbindung eine durchschnittliche Funktionalität von mehr als 2 aufweisen.

Geeignete Polyole sind z. B. Diole wie Glykole, bevorzugt Glykole mit 2 bis zu 25 Kohlenstoffatomen, wie z. B. 1,2-Ethandiol, 1,3-Propandiol, 1,4-Butandiol, 1,3-Butandiol, 1,5-Pentandiol, 1,4-Pentandiol, 1,6-Hexandiol, 1,10-Decandiol, Diethylenglykol, Dihydroxymethylcyclohexan, Bis(hydroxycyclohexyl)propan, Tetramethylcyclobutandiol, Cyclooctandiol oder Norbornandiol etc. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit etc.

Als Polyol eignen sich weiterhin α,ω-Hydroxy-terminierte Polymerisate, wie z. B. Polyesterdiole, Polycarbonatdiole, Polyetherole, α,ω-Dihydroxyalkyl-polysiloxane.

Geeignete Polyetherole sind Polyalkylenglykole, z. B. Polyethylenglykole, Polypropylenglykole, Polytetrahydrofurane, etc., Copolymerisate aus Ethylenoxid und Propylenoxid oder Blockcopolymerisate aus Ethylenoxid, Propylenoxid und/oder Butylenoxid, die die Alkylenoxideinheiten statistisch verteilt oder in Form von Blöcken einpolymerisiert enthalten. Geeignete Verbindungen sind auch α,ω-Diaminopolyether, die durch Aminierung von Polyalkylenoxiden mit Ammoniak herstellbar sind.

Als Polyesterdiole kommen alle diejenigen in Betracht, die üblicherweise zur Herstellung von Polyurethanen eingesetzt werden, insbesondere solche auf Basis aromatischer Dicarbonsäuren, wie Terephthalsäure, Isophthalsäure, Phthalsäure, Na- oder K-Sulfoisophthalsäure etc., aliphatischer Dicarbonsäuren, wie Adipinsäure oder Bernsteinsäure etc., und cycloaliphatischer Dicarbonsäuren, wie 1,2-, 1,3- oder 1,4-Cyclohexandicarbonsäure. Als Diolkomponente der Polyesterdiole kommen insbesondere aliphatische Diole in Betracht, wie Ethylenglykol, Propylenglykol, 1,6-Hexandiol, Neopentylglykol, Diethylenglykol, Polyethylenglykole, Polypropylenglykole, 1,4-Dimethylolcyclohexan.

Bevorzugt sind Polyesterdiole auf Basis von aromatischen und aliphatischen Dicarbonsäuren und aliphatischen Diolen, insbesondere solche, bei denen die aromatische Dicarbonsäure 10 bis 95 Mol-%, insbesondere 40 bis 90 Mol-% des gesamten Dicarbonsäureanteils (Rest aliphatische Dicarbonsäuren) ausmacht.

Geeignet sind weiterhin Polycarbonatdiole. Polycarbonatdiole entstehen z. B. durch Kondensation von Phosgen oder Kohlensäureestern wie Diphenylcarbonat oder Dimethylcarbonat mit Dihydroxyverbindungen. Geeignete Dihydroxyverbindungen sind aliphatische oder aromatische Dihydroxyverbindungen. Geeignete aliphatische Dihydroxyverbindungen sind die zuvor bei den Polyesterdiolen genannten. Als aromatische Dihydroxyverbindungen seien beispielsweise Bisphenole wie 2,2-Bis-(4-hydroxyphenyl)-propan (Bisphenol-A), Tetraalkylbisphenol-A, 4,4-(meta-Phenylendiisopropyl)diphenol (Bisphenol M), 4,4-(para-Phenylendiisopropyl)diphenol, 1,1-Bis-(4-hydroxyphenyl)-3,3,5-trimethylcyclohexan (BP-TMC), 2,2-Bis-(4-hydroxyphenyl)-2-phenylethan, 1,1-Bis-(4-hydroxyphenyl)-cyclohexan (Bisphenol-Z) sowie gegebenenfalls deren Gemische genannt. Die Polycarbonate können durch Verwendung geringer Mengen an Verzweigern verzweigt werden. Zu den geeigneten Verzweigern zählen Phloroglucin, 4,6-Dimethyl-2,4,6-tri-(4-hydroxyphenyl)-hepten-2, 4,6-Dimethyl-2,4,6-tri(4-hydroxyphenyl)-heptan; 1,3,5-Tri-(4-hydroxyphenyl)-benzol; 1,1,1-Tri(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan, 2,2-Bis-[4,4-bis-(4-hydroxyphenyl)-cyclohexyl]-propan; 2,4-Bis-(4-hydroxyphenyl-isopropyl)-phenol; 2,6-Bis(2-hydroxy-5'-methylbenzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tera-(4-hydroxyphenyl)-methan; Tetra-(4-(4-hydroxyphenyl-isopropyl)-phenoxy)-methan; a,a',a"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol, 1,4-Bis-(4',4"-dihydroxytriphenyl)-methyl)-benzol und insbesondere 1,1,1-Tri-(4-hydroxyphenyl)-ethan und Bis-(3-methyl-4-hydroxyphenyl)-2-oxo-2,3-dihydroindol.

Geeignete Polysiloxane a) sind z. B. α,ω-Dihydroxyalkyl-polydimethylsiloxane.

Geeignete Polyamine sind z. B. Ethylendiamin, Hexamethylendiamin, Diethylentriamin.

Geeignete Verbindungen mit Amin- und Hydroxyfunktionen sind z. B. Ethanolamin, n-Propanolamin, n-Butanolamin, Pentanolamin, Hexanolamin, Heptanolamin oder Octanolamin.

Beim Polyisocyanat handelt es sich um ein di- oder höherfunktionelles Isocyanat, das vorzugsweise unter Diisocyanaten, den Biurethen und Cyanuraten von Diisocyanaten sowie den Addukten von Diisocyanaten an Polyole ausgewählt ist. Geeignete Diisocyanate weisen in der Regel 4 bis 22 C-Atome auf. Die Diisocyanate sind üblicherweise ausgewählt unter aliphatischen, cyclo-aliphatischen und aromatischen Diisocyanaten, z. B. 1,4-Diisocyanatobutan, 1,6-Diisocyanatohexan, 1,6-Diisocyanato-2,2,4-trimethylhexan, 1,6-Diisocyanato-2,4,4-trimethylhexan, 1,2-, 1,3- und 1,4-Diisocyanatocyclohexan, 2,4- und 2,6-Diisocyanato-1-methylcyclohexan, 4,4'-Bis(isocyanatocyclohexyl)methan, Isophorondiisocyanat (= 1-Isocyanato-3,3,5-trimethyl-5-isocyanatomethylcyclohexan), 2,4- und 2,6-Toluylendiisocyanat, Tetramethylen-p-xylylendiisocyanat (= 1,4-Bis(2-isocyanatoprop-2-yl)benzol), 4,4'-Diisocyanatodiphenylmethan, vorzugsweise 1,6-Diisocyanatohexan und Isophorondiisocyanat, und Mischungen davon. Bevorzugte Verbindungen umfassen die Cyanurate und Biurete aliphatischer Diisocyanate, insbesondere die Cyanurate. Besonders bevorzugte Verbindungen sind das Isocyanurat und das Biuret des Isophorondiisocyanats und das Isocyanurat und das Biuret des 1,6-Diisocyanatohexans. Beispiele für Addukte von Diisocyanaten an Polyole sind die Addukte der oben genannten Diisocyanate an Glycerin, Trimethylolethan und Trimethylolpropan, z. B. das Addukt von Toluylendiisocyanaten an Trimethylolpropan, oder die Addukte von 1,6-Diisocyanatohexan oder Isophorondiisocyanat an Trimethylpropan und/oder Glycerin.

Zur Beschleunigung der Umsetzung zwischen den Isocyanat-reaktiven Gruppen des Isobutenpolymers und den Isocyanatgruppen des Vernetzungsmittels können bekannte Katalysatoren, wie z. B. Dibutylzinndilaurat, Zinn(II)-octoat, 1,4-Diazabicyclo[2.2.2]-octan oder Amine, wie Triethylamin, eingesetzt werden. Diese werden typischerweise in einer Menge von 10⁻⁵ bis 10⁻² g, bezogen auf des Gewicht des Vernetzungsmittels, eingesetzt.

Die Vernetzungsdichte kann durch Variation der Funktionalität des Polyisocyanats, des molaren Verhältnisses des Polyisocyanats zum Hydroxyl-terminierten Isobutenpolymer, oder durch Mitverwendung monofunktioneller, gegenüber Isocyanatgruppen reaktiver Verbindungen, wie einwertiger Alkohole, z. B. Ethylhexanol oder Propylheptanol, gesteuert werden.

### Resolharze

Resolharze werden durch Kondensation einer Phenolkomponente und einer Aldehydkomponente hergestellt. Deren Herstellung ist seit langem bekannt und ist z. B. in A.Garziella, L. A. Pilato, A. Knop,Phenolic Resins ; Springer Verlag (2000) beschrieben.

Als Phenolverbindungen eignen sich neben dem besonders bevorzugten Phenol auch substituierte Phenole wie z. B. Kresole oder Nonylphenol, oder phenolische Verbindungen, wie z. B. Bisphenol-A, jeweils gegebenenfalls in Kombination mit Phenol.

Beispiele geeigneter Aldehydesind Formaldehyd, Butyraldehyd oder Glyoxal. Besonders bevorzugt ist Formaldehyd.

Die Resolharz werden durch Kondensation der Phenolkomponente und des Aldehyds in Gegenwart eines basischen Katalysators, wie Ammoniumhydroxid oder eines Alkalimetallhydroxids, hergestellt. Bevorzugt werden Alkalimetallhydroxid Katalysatoren wie Natriumhydroxid undKalumhydroxid verwendet. Das Molverhältnis von Aldehyd (gegeben als Formaldehyd) zu Phenol in dem Resolharz kann im Bereich von1 : 1 bis 3 : 1 schwanken, ist aber bevorzugt im Bereich von 1,6 : 1 bis 2,5 : 1. Durch eine elektrophile Substitution werden hier drei Wasserstoffatome des Phenol-Moleküls durch jeweils eine -CH₂-OH-Gruppe ersetzt. Durch Abspaltung von Wasser kondensieren diese polyfunktionellen Phenolderivate zu Vorkondensaten.

Geeignete Vorkondensate, die auch modifiziert, z. B. alkyliert, insbesondere methyliert oder butyliert, sein können, werden dann mit sauren Kondensationsmitteln zu vernetzten hochmolekularen Systemen kondensiert.

Zur Herstellung des erfindungsgemäßen Netzwerks geht man z. B. so vor, dass man das Isobutenpolymer in den Vorläufern des vernetzten Polymers, z. B. den konstituierenden Monomeren, gegebenenfalls unter Zusatz eines Lösungsmittels löst oder dispergiert, die Lösung bzw. Dispersion in eine Gussform einfüllt und die Aufbaureaktion initiiert, z. B. durch Temperaturerhöhung oder energiereiche Strahlung. Nach der Ausbildung des Netzwerks kann das Material entformt werden.

Alternativ geht man so vor, dass man die Lösung oder Dispersion durch Zusatz von Füllstoffen und/oder Verdickern in einen plastisch formbaren Zustand überführt. Diese Masse kann dann zu einer beliebigen gewünschten Gestalt geformt werden. Die Formung kann zweckmäßigerweise durch Extrusion durch eine Formdüse erfolgen. Auf diese Weise sind beispielsweise Dichtprofile leicht herstellbar. Die Gestalt der geformten Masse wird dann durch Initiierung der vernetzenden Aufbaureaktion fixiert.

Alternativ kann man eine Lösung oder Dispersion herstellen und die Aufbaureaktion initiieren, wobei man den Vernetzungsgrad so einstellt, dass das primär erhaltene Netzwerk noch formbar ist. Das primär erhaltene Netzwerk kann dann, gegebenenfalls nach Zusatz von Füllstoffen, zu einer beliebigen gewünschten Gestalt geformt werden. Die Gestalt der geformten Masse wird dann durch eine Nachvernetzung fixiert. Die Nachvernetzung kann durch Temperaturerhöhung, energiereiche Strahlung und/oder geeignete Katalysatoren oder dergleichen erreicht werden. Die Nachvernetzung wird erleichtert, wenn bei der Aufbaureaktion nachvernetzende Monomere mitverwendet werden, deren vernetzungsaktive Stellen an der Aufbaureaktion nicht teilnehmen und nach der Aufbaureaktion und Formung selektiv nachvernetzt werden können.

Die erfindungsgemäßen Massen können daneben übliche Hilfsstoffe enthalten, die für die jeweilige Anwendung üblich sind. Hierzu zählen z. B. Füllstoffe, Verdünner oder Stabilisatoren.

In bevorzugten Ausführungsformen werden in die erfindungsgemäßen semi-interpenetrierenden Netzwerke Wirk- oder Effektstoffe eingearbeitet. Geeignete Wirkstoffe sind beispielsweise Biozide; geeignete Effektstoffe sind Farbstoffe. Die Wirk- oder Effektstoffe sind in der Regel mit reinem Polyisobuten nicht mischbar, sind aber in dem semi-interpenetrierenden Netzwerk löslich oder dispergierbar oder können im vernetzten Polymer kovalent verankert werden. Die Erfindung zeigt daher erstmalig einen Weg auf, um die Eigenschaften von Isobutenpolymeren mit den Eigenschaften der Wirk- und Effektstoffe zu kombinieren.

Geeignete Füllstoffe sind z. B. Kieselsäure, kolloidale Kieselsäure, Calciumcarbonat, Ruß, Titandioxid, Glimmer, Quarz, Glasfasern und Glaskugeln und dergleichen.

Geeignete Verdünner sind z. B. Polybuten, flüssiges Polybutadien, hydriertes Polybutadien, Paraffinöl, Naphthenate, ataktisches Polypropylen, Dialkylphthalate, Reaktivverdünner, z. B. Alkohole und Oligoisobutene.

Geeignete Stabilisatoren sind z. B. 2-Benzothiazolylsulfid, Benzothiazol, Thiazol, Dimethylacetylendicarboxylat, Diethylacetylendicarboxylat, Butylhydroxytoluol (BHT), Butylhydroxyanisol, Vitamin E.

Die Erfindung betrifft auch ein Verfahren zum Ausbilden einer Klebeverbindung zwischen Substraten, Abdichten von Hohlräumen in oder zwischen Substraten oder Einbetten von Substraten, wobei man zwischen die zu verbindenden Substrate oder in die abzudichtenden Hohlräume, wie z. B. Fugen zwischen gleichen oder verschiedenen Substraten, eine Zusammensetzung einbringt oder das einzubettende Substrat mit einer Zusammensetzung umgibt, die ein lineares unvernetztes Isobutenpolymer und polyfunktionelle Harz-Vorläufer und/oder Monomere zusammen mit wenigstens einem Vernetzungsmittel enthält (im Folgenden auch als "unvernetztes semi-IPN" bezeichnet), und in der Zusammensetzung eine Aufbaureaktion initiiert.

In bevorzugten Ausführungsformen enthält die Zusammensetzung ein lineares unvernetztes Isobutenpolymer und ethylenisch ungesättigte Monomere, die wenigstens ein mehrfach ethylenisch ungesättigtes Monomer umfassen. Zur Aufbaureaktion initiiert man in der Zusammensetzung eine radikalische Polymerisation.

Die radikalische Polymerisation wird vorzugsweise thermisch oder durch energiereiche Strahlung, insbesondere durch UV-Licht, initiiert. Bei Initiierung durch energiereiche Strahlung enthält die Zusammensetzung vorzugsweise wenigstens einen Fotoinitiator. Die Konsistenz der Zusammensetzung kann durch Zusatz geeigneter Hilfsstoffe, wie Füllstoffen, Verdickern und/oder Rheologiemodifizierern, so eingestellt werden, dass sie dem jeweiligen Anwendungszweck angepasst ist.

Das Verfahren eignet sich besonders, wenn wenigstens eines der Substrate unter Glas, keramischen Materialien, wie Fliesen oder Kacheln, z. B. im Sanitärbereich, und mineralischen Baustoffen, wie Zement, Mörtel, Beton oder mineralischen Formsteinen, z. B. Ziegel, ausgewählt ist. In einer anderen Ausführungsform ist das Substrat unter elektronischen Bauteilen ausgewählt.

Die Erfindung betrifft auch ein Verfahren zur Herstellung flächenförmiger Gebilde, insbesondere Folien, wobei man auf einen Träger eine Zusammensetzung aufbringt, die ein lineares unvernetztes Isobutenpolymer und polyfunktionelle Harz-Vorläufer und/oder Monomere zusammen mit wenigstens einem Vernetzungsmittel enthält, und in der Zusammensetzung eine Aufbaureaktion initiiert.

In bevorzugten Ausführungsformen enthält die Zusammensetzung ein lineares unvernetztes Isobutenpolymer und ethylenisch ungesättigte Monomere, die wenigstens ein mehrfach ethylenisch ungesättigtes Monomer umfassen. Zur Aufbaureaktion initiiert man in der Zusammensetzung eine radikalische Polymerisation.

Die radikalische Polymerisation wird vorzugsweise thermisch oder durch energiereiche Strahlung, insbesondere durch UV-Licht, initiiert. Bei Initiierung durch energiereiche Strahlung enthält die Zusammensetzung vorzugsweise wenigstens einen Fotoinitiator. Der beschichtete Träger wird mit energiereichem Licht, vorzugsweise UV-Licht, bestrahlt, um die gewünschte Vernetzung zu erreichen. Die Strahlungsenergie kann z. B. 10 mJ/cm² bis 1500 mJ/cm² bestrahlte Fläche betragen.

Bei dem Trägermaterial kann es sich um einen temporären Träger, von dem das flächenförmige Gebilde nach der Herstellung oder unmittelbar vor der Anwendung wieder abgezogen wird z. B. um eine Walze, eine Trennfolie aus Papier, das silikonisiert sein kann, Kunststofffolie aus Polyolefinen oder PVC handeln.

Das Aufbringen auf den Träger kann nach bekannten Verfahren erfolgen, z. B. durch Walzenauftrag, Rakeln, Tauchen oder dergleichen. Die Auftragsmenge kann insbesondere 10 bis 300 g, vorzugsweise 10 bis 150 g, und üblicherweise oft 20 bis 80 g pro Quadratmeter Träger betragen.

Die erfindungsgemäßen Materialien eigenen sich für folgende Anwendungen. Je nach Anwendungszweck kommen vorgeformte semi-interpenetrierende Netzwerke (z. B. in Form von Folien) zum Einsatz oder das semi-interpenetrierende Netzwerk wird in situ aus einem unvernetzten semi-IPN erhalten:
- Dichtmassen für Fenster oder Türen. Das erfindungsgemäße semi-interpenetrierende Netzwerk kann bei höheren Temperaturen als reines PIB im Fensterdichtungsbereich eingesetzt werden, ohne dass es zum Ausschwitzen kommt.
- Dichtungsmaterial für den Sanitärbereich. Man bringt das unvernetzte semi-IPN ein und polymerisiert/vernetzt in situ, um wasserdichte Dichtungsmassen mit guter Haftung zu Baumaterialien herzustellen. Die Dichtmassen hemmen den Bewuchs durch Pilze oder Bakterien zulassen. Durch derartige Massen könnte man feuchtigkeitsvernetzende Silikonsysteme ersetzen.
- Anti-fouling-Überzüge, die das Anwachsen von Mikroorganismen, wie Bakterien oder Algen, verhindern oder vermindern.
- Wasserdichte Planen, z. B. zum Auskleiden von Erdlöchern und Hohlräumen in geologischen Formationen, in die z. B. Verbrennungsrückstände verbracht werden.
- Werkstoffen oder Formteilen zur Bedachung von Gebäuden, in Form von Folienbahnen oder Platten.
- Polymerfolien zur Glasbeschichtung. Folien aus dem erfindungsgemäßen semi-interpenetrierenden Netzwerk können flächig auf Glasoberflächen, insbesondere Glasscheiben, aufgeklebt werden. Diese Folien dienen dem Strahlungsschutz oder verleihen der Glasscheibe eine Farbe (Autoglastönung).
- Ultradünne Filme, die zum Schutz vor Moos, Algen oder Schimmel, auf Gegenstände wie Skulpturen, Gemälde, alte Bücher oder Baudenkmäler aufgebracht werden.
- Massekleber mit hoher Klebrigkeit an den Kontaktflächen und hoher Kohäsion im Inneren. Vermutlich tritt eine gewisse Phasenseparation ein, so dass Isobutenpolymer an den äußeren Oberflächen austritt. Das Isobutenpolymer dringt in die mikroskopischen Oberflächenunebenheiten und Hohlräume der zu verbindenen Flächen ein. So wird gute Benetzung der Flächen und Adhäsion gewährleistet. Im Innern des Klebstoffs bewirkt das Netzwerk strukturelle Integrität und damit eine gute Kohäsion der Masse. Die Kleber können transparent eingestellt werden. Sie zeigen Vorteile gegenüber Dispersions-basierten Klebstoffen, die bei Wasserkontakt trüb werden können
- Klebstoffe für hydrophobe Oberflächen, wie Kunststoffe,
- Klebstoffe für Glasoberflächen, beispielsweise Doppelverglasungskleber / Sicherheitsglas. Sicherheitsglas ist aus einem Sandwich set-up Glas/Polymerfolie/Glas aufgebaut. Als Folie wird herkömmlich Polyvinylbutyral verwendet. Die klebenden Eigenschaften und die mechanische Verstärkung kann auch mit Folien aus erfindungsgemäßen semi-interpenetrierenden Netzwerken erreicht werden.
- Klebstoffe für so genannte 100%-Systeme, bei denen die Aushärtung des Klebstoffs nach Auftrag durch nachträgliche Vernetzung vollzogen wird.- Isolatorschichten für die Elektronikindustrie. Erfindungsgemäße semi-interpenetrierende Netzwerke ermöglichen die Nutzung von PIB in der Elektronikindustrie zum wasserdichten Abschließen / Verpacken von elektronischen Bauteilen, um Kurzschlüsse, Korrosion, etc. zu vermeiden.

Diese Aufzählung der potentiellen Anwendungen ist nicht abschließend.

Die Erfindung wird durch die beigefügten Figuren und die nachfolgenden Beispiele näher veranschaulicht (Im Folgenden ist Polyisobuten bisweilen als PIB abgekürzt).
Fig. 1 zeigt das Speichermodul (Kreise) und den Verlustfaktor (tan δ) (Quadrate) in Abhängigkeit von der Temperatur für ein semi-interpenetrierendes Netzwerk (semi-IPN) aus Polyisobuten/Polystyrol (Gewichtsverhältnis 50/50).
Fig. 2 zeigt den Verlauf der Probenmasse in Abhängigkeit von der Temperatur für ein semi-IPN aus Polyisobuten/Polystyrol (Gewichtsverhältnis 50/50).
Fig. 3 zeigt das Speichermodul (Kreise) und den Verlustfaktor (tan δ) (Quadrate) in Abhängigkeit von der Temperatur für ein semi-IPN aus Polyisobuten/Polystyrol (Gewichtsverhältnis 60/40).
Fig. 4 zeigt den Verlauf der Probenmasse in Abhängigkeit von der Temperatur für ein semi-IPN aus Polyisobuten/Polystyrol (Gewichtsverhältnis 60/40).
Fig. 5 zeigt das Speichermodul (Kreise) und den Verlustfaktor (tan δ) (Quadrate) in Abhängigkeit von der Temperatur für ein semi-IPN aus Polyisobuten/Polycyclohexylmethacrylaten (Gewichtsverhältnis 70/30).
Fig. 6 zeigt den Verlauf der Probenmasse in Abhängigkeit von der Temperatur für ein semi-IPN aus Polyisobuten/Polycyclohexylmethacrylaten (Gewichtsverhältnis 70/30).

### Beispiel 1: Herstellung in Abwesenheit eines Lösungsmittels

Unter Rühren löste man 2 g Oppanol® B 15 SFN (molare Masse Mn 75000) in 2 g Styrol und 0,2 g Divinylbenzol. Man versetzte das Gemisch mit 0,04 g Benzoylperoxid und vermischte gründlich. Nach Erhalten einer homogenen, viskosen Lösung überführte man die Lösung in eine Gussform, die aus zwei Glasplatten bestand, die von einer Teflondichtung mit einer Teflondichtung mit einer Dicke von 1 mm auseinander gehalten wurden. Die Gussform wurde mit Klammern zusammengehalten und in einen Ofen mit Temperatursteuerung gestellt. Die Temperatur wurde 5 Stunden auf 80 °C gehalten. Man entnahm die Gussform aus dem Ofen, ließ abkühlen und entformte die Probe.

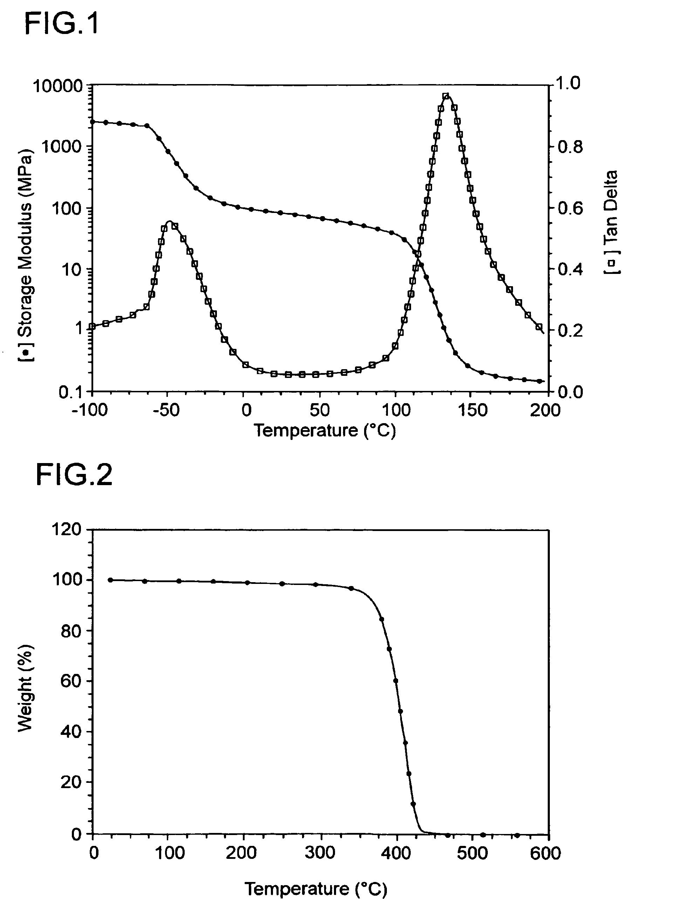

Man erhielt ein weißes Material. Die thermomechanischen Eigenschaften (gemessen mit einem dynamischen thermomechanischen Analysengerät DMTA) des erhaltenen semi-interpenetrierenden Netzwerkes sind in Figur 1 dargestellt. Das erhaltene semi-interpenetrierende Netzwerk mit einem Gewichtsverhältnis von PIB/Polystyrol-Phase von 50/50 zeigt zwei mechanische Relaxationen bei -50 und 150°C, die für PIB beziehungsweise Polystyrol charakteristisch sind. Dies ist ein Hinweis auf das Vorliegen diskreter Polymerphasen, die nicht chemisch miteinander verbunden sind. Das erhaltene semi-interpenetrierende Netzwerk zeigt ein Speichermodul von 250 MPa bei 20°C und keinen kalten Fluss bei hohen Temperaturen (bis 200°C).

Die thermogravimetrische Analyse (TGA) zeigt bei Temperaturen oberhalb 350 °C einen erheblichen Massenverlust, der den Materialabbau veranschaulicht (siehe Figur 2). Es erfolgt keine vorhergehende Entmischung.

### Beispiel 2: Herstellung in Gegenwart eines Lösungsmittels

Die Herstellung des semi-interpenetrierenden Netzwerks kann zur Herabsetzung der Viskosität der Anfangsmischung auch in Gegenwart eines Lösungsmittels erfolgen.

Man löste unter Rühren 3 g Oppanol® B 15SFN und 0,04 g Benzoylperoxid in 2 g Styrol, 0,1 g Divinylbenzol und 0,8 mL Toluol. Nach Erhalten einer homogenen, viskosen Lösung überführte man die Lösung in eine Gussform, die aus zwei Glasplatten bestand, die von einer Teflondichtung mit einer Teflondichtung mit einer Dicke von 1 mm auseinander gehalten wurden. Die Gussform wurde mit Klammern zusammengehalten und in einen Ofen mit Temperatursteuerung gestellt. Die Temperatur wurde 5 Stunden auf 80 °C gehalten. Man entnahm die Gussform aus dem Ofen, ließ abkühlen und entformte die Probe.

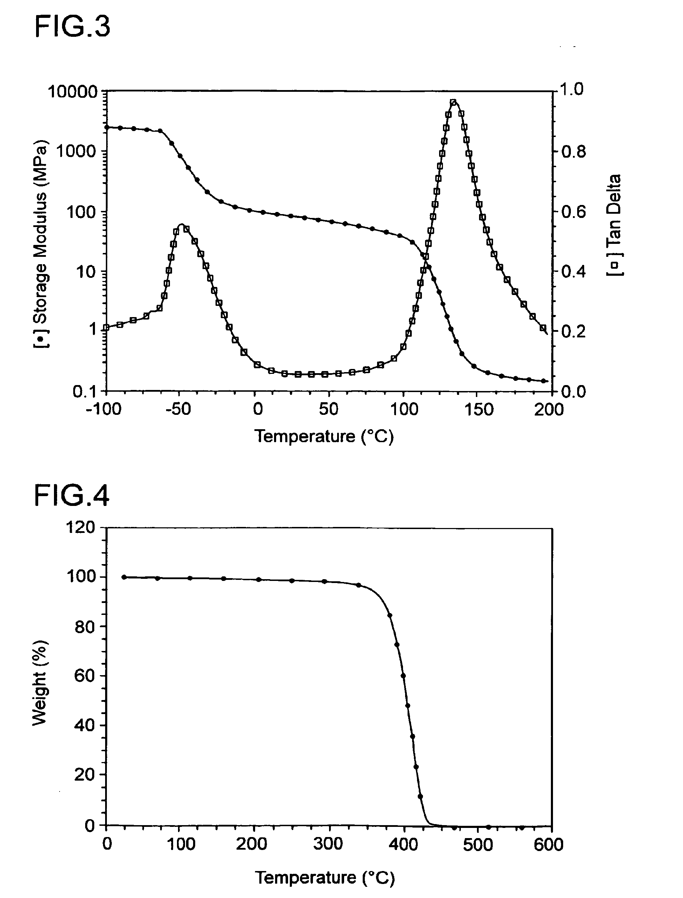

Man erhielt ein weißes Material. Das erhaltene semi-interpenetrierende Netzwerk mit einem Gewichtsverhältnis von PIB/Polystyrol-Phase von 60/40 zeigt zwei mechanische Relaxationen bei -50 und 140°C (siehe Figur 3) und ein Speichermodul von etwa 100MPa bei Raumtemperatur. Bei hohen Temperaturen (bis 200 °C) stellte man keinen kalten Fluss fest.

Gemäß der unter Argon durchgeführten TGA stellte man bei Temperaturen oberhalb 375 °C eine Schädigung des semi-interpenetrierenden Netzwerkes fest (siehe Figur 4).

### Beispiel 3: Herstellung in Abwesenheit eines Lösungsmittels

In einem Reaktionsgefäß legte man 2 g Oppanol® B 15 SFN, 2 g Cyclohexylmethacrylat und 0,1 g Ethylenglycoldimethacrylat (5 Gew.-%, bezogen auf Cyclohexylmethacrylat) vor. Man rührte die Mischung vorsichtig unter einer Argonatmopshäre. Danach gab man 0,04 g Benzoylperoxid (2% Gew.-%, bezogen auf Cyclohexylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein transparentes Material.

### Beispiel 4: Herstellung in Gegenwart eines Lösungsmittels

In einem Reaktionsgefäß legte man 3 g Oppanol® B15SFN, 1,3 g Cyclohexylmethacrylat, 64 mg Ethylenglycoldimethacrylat (5 Gew.-%, bezogen auf Cyclohexylmethacrylat) und 2.7 mL Toluol vor. Man rührte die Mischung vorsichtig unter einer Argonatmopshäre. Danach gab man 26 mg Benzoylperoxid (2% Gew.-%, bezogen auf Cyclohexylmethacrylat) zu. Man rührte die Mischung und gab sie danach in eine Gussform. Die Gussform wurde in einen Ofen gestellt. Die Temperatur wurde 5 Stunden auf 80 °C gehalten. Man entnahm die Gussform aus dem Ofen, ließ abkühlen und entformte die Probe. Man erhielt ein transparentes Material.

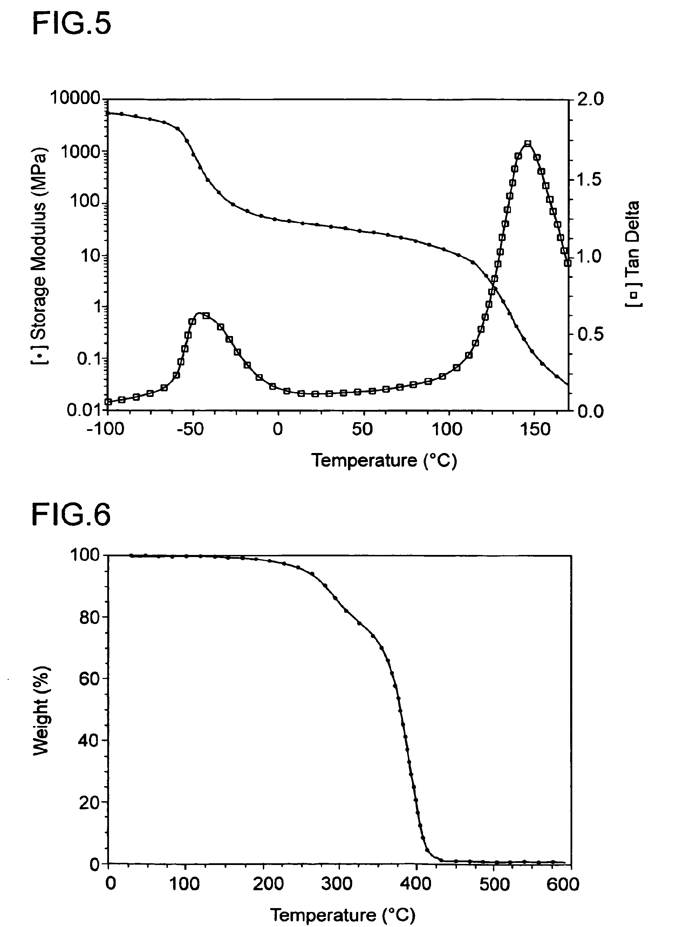

Das erhaltene semi-interpenetrierende Netzwerk mit einem Gewichtsverhältnis von PIB/Polycyclohexylmethacrylat-Phase von 70/30 zeigt zwei mechanische Relaxationen bei -45 und 145°C, die für die PIB- bzw. Polycyclohexylmethacrylatphase charakteristisch ist und ein Speichermodul von 40 MPa bei Raumtemperatur (siehe Figur 5).

Gemäß der unter einer Argonatmosphäre durchgeführten TGA stellte man oberhalb 250 °C einen Massenverlust fest, der vermutlich auf entweichendes Toluol zurückzuführen ist.

### Beispiel 5: Herstellung in Abwesenheit eines Lösungsmittels

Auf ähnliche Weise wie in Beispiel 3 wurde ein semi-interpenetrierendes Netzwerk mit einem Gewichtsverhältnis 60/40 von PIB/-Polycyclohexylmethacrylat-Phase hergestellt.

### Beispiel 6: Allgemeine Vorschrift zur Herstellung von semi-interpenetrierenden Netzwerken mit PIB/Polyalkylmethacrylat-Phase in Abwesenheit eines Lösungsmittels

Oppanol® B15SFN, C₃-C₁₈-Alkylmethacrylat und Vernetzer wurden in einem 100 mL Reaktionsgefäß mit einem mechanischen Rührer vorgelegt. Die Mischung wurde vorsichtig gerührt, bis sie homogen wurde. Anschließend gab man einen Radikalstarter zu. Man rührte die Mischung eine weitere halbe Stunde und gab sie danach in eine Gussform, die aus zwei Glasplatten bestand, die von einer Teflondichtung mit einer Teflondichtung mit einer Dicke von 1 mm auseinander gehalten wurden, um die Probe in Form eines Film zu erhalten. Die Gussform wurde mit Klammern zusammengehalten und in einen Ofen mit Temperatursteuerung gestellt. Die Temperatur wurde über den angegebenen Zeitraum bei der angegebenen Temperatur (gemäß dem gewählten Radikalstarter) gehalten. Man entnahm die Gussform aus dem Ofen, ließ abkühlen und entformte die Probe.

### Beispiel 7:

2 g Oppanot® B15SFN, 2 g Butylmethacrylat und 0,1 g Ethylenglycoldimethacrylat (5 Gew.-%, bezogen auf Butylmethacrylat) wurden vorgelegt. Die Mischung wurde vorsichtig unter Argon gerührt. Danach gab man 0,04 g Benzoylperoxid (2 Gew.-%, bezogen auf Butylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe.

Man erhielt ein transluzentes Material, das 46 Gew.-% an extrahierbarer Masse enthielt (gemessen durch Soxhlet-Extraktion mit Dichlormethan über 48 h). Die extrahierbare Masse bestand hauptsächlich aus Oppanol® B15SFN.

### Beispiel 8:

2 g Oppanol® B15SFN, 2 g Hexylmethacrylat und 0,1 g Ethylenglycoldimethacrylat (5 Gew.-%, bezogen auf Hexylmethacrylat) wurden vorgelegt. Die Mischung wurde vorsichtig unter Argon gerührt. Danach gab man 0,04 g Benzoylperoxid (2 Gew.-%, bezogen auf Hexylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe.

Man erhielt ein weißes Material, das 53 Gew.-% an extrahierbarer Masse enthielt (gemessen durch Soxhlet-Extraktion mit Dichlormethan über 48 h). Die extrahierbare Masse bestand hauptsächlich aus Oppanol® B15SFN.

### Beispiel 9:

2 g Oppanol® B15SFN, 2 g Isobutylmethacrylat und 0,1 g Ethylenglycoldimethacrylat (5 Gew.-%, bezogen auf Isobutylmethacrylat) wurden vorgelegt. Die Mischung wurde vorsichtig unter Argon gerührt. Danach gab man 0,04 g Benzoylperoxid (2 Gew.-%, bezogen auf Isobuylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein weißes Material.

### Beispiel 10:

2 g Oppanol® B15SFN, 2 g tert-Butylmethacrylat und 0,1 g Ethylenglycoldimethacrylat (5 Gew.-%, bezuogen auf tert-Butylmethacrylat) wurden vorgelegt. Die Mischung wurde vorsichtig unter Argon gerührt. Danach gab man 0,04 g Benzoylperoxid (2 Gew.-%, bezogen auf tert-Butylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein weißes Material.

### Beispiel 11:

2 g Oppanol® B15SFN, 2 g Isodecylmethacrylat und 0,1 g Ethylenglycoldimethacrylat (5 Gew.-%, bezogen auf Isodecylmethacrylat) wurden vorgelegt. Die Mischung wurde vorsichtig unter Argon gerührt. Danach gab man 0,04 g Benzoylperoxid (2 Gew.-%, bezogen auf Isodecylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein weißes Material, das 46 Gew.-% an extrahierbarer Masse enthielt (gemessen durch Soxhlet-Extraktion mit Dichlormethan über 48 h). Die extrahierbare Masse bestand hauptsächlich aus Oppanol® B15SFN.

### Beispiel 12:

2 g Oppanol® B15SFN, 2 g Laurylmethacrylat und 0,1 g Ethylenglycoldimethacrylat (5 Gew.-%, bezogen auf Laurylmethacrylat) wurden vorgelegt. Die Mischung wurde vorsichtig unter Argon gerührt. Danach gab man 0,04 g Benzoylperoxid (2 Gew.-%, bezogen auf Laurylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein weißes Material.

### Beispiel 13:

2 g Oppanol® B15SFN, 2 g Stearylmethacrylat und 0,1 g Ethylenglycoldimethacrylat (5 Gew.-%, bezogen auf Stearylmethacrylat) wurden vorgelegt. Die Mischung wurde vorsichtig unter Argon gerührt. Danach gab man 0,04 g Benzoylperoxid (2 Gew.-%, bezogen auf Stearylmethacrylat) zu. Man rührte die Mischung und gab sie danach in eine Gussform. Die Gussform wurde in einen Ofen gestellt. Die Temperatur wurde 6 Stunden auf 70 °C gehalten. Man entnahm die Gussform aus dem Ofen, ließ abkühlen und entformte die Probe. Man erhielt ein weißes Material.

### Beispiel 14:

Man stellte ein semi-interpenetrierendes Netzwerk mit einem Gewichtsverhältnis von PIB/Polybutylmethacrylat-Phase von 50/50 gemäß der in Beispiel 7 beschrieben Vorschrift her, wobei man jedoch 8,6 mg tetrachloriertes Perylen zu der Ausgangsmischung gab. Man erhielt ein oranges Material.

## Patentansprüche

1. Seml-interpenetrierendes Netzwerk mit einer ersten Phase eines linearen unvernetzten Isobutenpolymers und einer zweiten Phase eines vernetzten Polymers, wobei das vernetzte Polymer durch vernetzende Aufbaureaktion in Gegenwart des Isobutenpolymers erhalten ist.

2. Netzwerk nach Anspruch 1, wobei das vernetzte Polymer durch radikalische Polymerisation ethylenisch ungesättigter Monomere, die wenigstens ein mehrfach ethylenisch ungesättigtes Monomer umfassen, erhalten ist.

3. Netzwerk nach Anspruch 2, wobei die ethylenisch ungesättigten Monomere (Meth)acrylmonomere und/oder vinylaromatische Monomere umfassen.

4. Netzwerk nach Anspruch 3, wobei die ethylenisch ungesättigten Monomere unter Styrol, Cyclohexylmethacrylat und C₃-C₁₈-Alkylmethacrylaten ausgewählt sind.

5. Netzwerk nach einem der Ansprüche 2 bis 4, wobei die Monomere ein Polymer mit einem Löslichkeitsparameter ergeben, der sich von dem des Isobutenpolymers um weniger als 1 MPa^{1/2} unterscheidet.

6. Netzwerk nach einem der Ansprüche 2 bis 4, wobei der Vernetzungsgrad des vernetzten Polymers 1 bis 20 % beträgt.

7. Netzwerk nach Anspruch 1, wobei das vernetzte Polymer ein Polysiloxan, ein Polyurethan und/oder Polyharnstoff oder ein Resolharz ist.

8. Netzwerk nach einem der vorhergehenden Ansprüche, wobei das Gewichtsverhältnis der ersten Phase zur zweiten Phase 5:95 bis 95:5 beträgt.

9. Netzwerk nach einem der vorhergehenden Ansprüche, wobei das Isobutenpolymer ein zahlenmittleres Molekulargewicht von 500 bis 500 000 aufweist.

10. Verfahren zur Herstellung eines semi-interpenetrierenden Netzwerks nach Anspruch 1, bei dem man polyfunktionelle Harz-Vortäufer in Gegenwart des Isobutenpolymers einer Aufbaureaktion unterzieht.

11. Verfahren zur Herstellung eines semi-interpenetrierenden Netzwerks nach Anspruch 1, bei dem man Monomere, die das vernetzte Polymer aufbauen, zusammen mit wenigstens einem Vernetzungsmittel in Gegenwart des Isobutenpolymers einer Aufbaureaktion unterzieht.

12. Formkörper, enthaltend ein semi-interpenetrierendes Netzwerk nach einem der Ansprüche 1 bis 9.

13. Verfahren zum Ausbilden einer Klebeverbindung zwischen Substraten, Abdichten von Hohlräumen in oder zwischen Substraten oder Einbetten von Substraten, wobei man zwischen die zu verbindenden Substrate oder in die abzudichtenden Hohlräume eine Zusammensetzung einbringt oder das einzubettende Substrat mit einer Zusammensetzung umgibt, die ein lineares unvernetztes Isobutenpolymer und polyfunktionelle Harz-Vorläufer und/oder Monomere zusammen mit wenigstens einem Vernetzungsmittel enthält, und in der Zusammensetzung eine Aufbaureaktion initiiert.

14. Verfahren nach Anspruch 13, wobei wenigstens ein Substrat unter Glas, keramischen Materialien und mineralischen Baustoffen ausgewählt ist.

15. Verfahren zur Herstellung flächenförmiger Gebilde, wobei man auf einen Träger eine Zusammensetzung aufbringt, die ein lineares unvernetztes Isobutenpolymer und polyfunktionelle Harz-Vortäufer und/oder Monomere zusammen mit wenigstens einem Vernetzungsmittel enthält, und in der Zusammensetzung eine Aufbaureaktion initiiert.

## Claims

1. A semi-interpenetrating network having a first phase of a linear noncrosslinked isobutene polymer and a second phase of a crosslinked polymer, wherein the crosslinked polymer is obtained by crosslinking molecular enlargement reaction in the presence of the isobutene polymer.

2. The network according to claim 1, wherein the crosslinked polymer is obtained by free-radical polymerization of ethylenically unsaturated monomers comprising at least one polyethylenically unsaturated monomer.

3. The network according to claim 2, wherein the ethylenically unsaturated monomers comprise (meth)acrylic monomers and/or vinylaromatic monomers.

4. The network according to claim 3, wherein the ethylenically unsaturated monomers are selected from styrene, cyclohexyl methacrylate, and C₃-C₁₈ alkyl methacrylates.

5. The network according to any one of claims 2 to 4, wherein the monomers produce a polymer having a solubility parameter which differs from that of the isobutene polymer by less than 1 MPa^{1/2}.

6. The network according to any one of claims 2 to 4, wherein the degree of crosslinking of the crosslinked polymer is 1% to 20%.

7. The network according to claim 1, wherein the crosslinked polymer is a polysiloxane, a polyurethane and/or polyurea or a resole resin.

8. The network according to any one of the preceding claims, wherein the weight ratio of the first phase to the second phase is 5:95 to 95:5.

9. The network according to any one of the preceding claims, wherein the isobutene polymer has a number-average molecular weight of 500 to 500 000.

10. A process for preparing a semi-interpenetrating network according to claim 1, in which polyfunctional resin precursors are subjected to a molecular enlargement reaction in the presence of the isobutene polymer.

11. A process for preparing a semi-interpenetrating network according to claim 1, in which monomers which construct the crosslinked polymer are subjected to a molecular enlargement reaction with at least one crosslinking agent in the presence of the isobutene polymer.

12. A molding comprising a semi-interpenetrating network according to any one of claims 1 to 9.

13. A method of forming an adhesive bond between substrates, sealing cavities in or between substrates, or embedding substrates, wherein a composition is introduced between the substrates to be bonded or into the cavities to be sealed, or the substrate to be embedded is surrounded with a composition, which comprises a linear noncrosslinked isobutene polymer and polyfunctional resin precursors and/or monomers together with at least one crosslinking agent, and in the composition a molecular enlargement reaction is initiated.

14. The method according to claim 13, wherein at least one substrate is selected from glass, ceramic materials, and mineral building materials.

15. A method of producing substantially two-dimensional structures, wherein a composition which comprises a linear noncrosslinked isobutene polymer and polyfunctional resin precursors and/or monomers together with at least one crosslinking agent is applied to a support and in the composition a molecular enlargement reaction is initiated.

## Revendications

1. Réseau semi-interpénétrant comprenant une première phase d'un polymère d'isobutène linéaire non réticulé et une seconde phase d'un polymère réticulé, le polymère réticulé étant obtenu par une réaction de croissance réticulante en présence du polymère d'isobutène.

2. Réseau selon la revendication 1, dans lequel le polymère réticulé est obtenu par polymérisation radicalaire de monomères éthyléniquement insaturé, qui comprennent au moins un monomère polyéthyléniquement insaturé.

3. Réseau selon la revendication 2, dans lequel les monomères éthyléniquement insaturé comprennent des monomères (méth)acryliques et/ou des monomères aromatiques de vinyle.

4. Réseau selon la revendication 3, dans lequel les monomères éthyléniquement insaturés sont choisis parmi le styrène, le méthacrylate de cyclohexyle et les méthacrylates d'alkyle en C₃-C₁₈.

5. Réseau selon l'une quelconque des revendications 2 à 4, dans lequel les monomères engendrent un polymère ayant un paramètre de solubilité qui diffère de moins de 1 MPa^{1/2} de celui du polymère d'isobutène.

6. Réseau selon l'une quelconque des revendications 2 à 4, dans lequel le degré de réticulation du polymère réticulé est de 1 à 20 %.

7. Réseau selon la revendication 1, dans lequel le polymère réticulé est un polysiloxane, un polyuréthane et/ou une polyurée, ou une résine de résol.

8. Réseau selon l'une quelconque des revendications précédentes, dans lequel le rapport en poids entre la première phase et la seconde phase est de 5:95 à 95:5.

9. Réseau selon l'une quelconque des revendications précédentes, dans lequel le polymère d'isobutène présente un poids moléculaire moyen en nombre de 500 à 500 000.

10. Procédé de fabrication d'un réseau semi-interpénétrant selon la revendication 1, dans lequel des précurseurs de résine polyfonctionnels sont soumis à une réaction de croissance en présence du polymère d'isobutène.

11. Procédé de fabrication d'un réseau semi-interpénétrant selon la revendication 1, dans lequel des monomères, qui forment le polymère réticulé, sont soumis avec au moins un agent de réticulation à une réaction de croissance en présence du polymère d'isobutène.

12. Corps moulé, contenant un réseau semi-interpénétrant selon l'une quelconque des revendications 1 à 9.

13. Procédé de formation d'une liaison adhésive entre des substrats, de colmatage de cavités dans ou entre des substrats, ou d'encastrement de substrats, dans lequel une composition, qui contient un polymère d'isobutène linéaire non réticulé et des précurseurs de résine polyfonctionnels et/ou des monomères avec au moins un agent de réticulation, est introduite entre les substrats à relier, dans les cavités à colmater ou autour du substrat à encastrer, et une réaction de croissance est initiée dans la composition.

14. Procédé selon la revendication 13, dans lequel au moins un substrat est choisi parmi le verre, les matériaux céramiques et les matériaux de construction minéraux.

15. Procédé de fabrication de structures plates, dans lequel une composition, qui contient un polymère d'isobutène linéaire non réticulé et des précurseurs de résine polyfonctionnels et/ou des monomères avec au moins un agent de réticulation, est appliquée sur un support, et une réaction de croissance est initiée dans la composition.
